# DEMANDE DE BREVET EUROPEEN

(11) **EP 2 499 945 A1**
(43) Date de publication de la demande: **19.09.2012**
(21) Numéro de dépôt: 12159985.6
(22) Date de dépôt: 16.03.2012
(51) Int. Cl.: A47J 31/36, A47J 47/01, B65D 83/04, A47F 1/10, A47F 1/035, B65D 85/62, B65D 85/804

(54) **Dispositif de distribution d'éléments individuels**

(30) Priorité: 16.03.2011 FR 1152136
(71) Demandeur: Poumeyrol, Jean Bernard, 75015 Paris (FR)
(72) Inventeur: Poumeyrol, Jean Bernard, 75015 Paris (FR)
(74) Mandataire: Aupetit, Muriel J. C.

(57) **Abrégé**

Dispositif de distribution d'éléments individuels (1) comportant :
- un silo (42),
- ledit silo contenant des éléments emballés individuels (4) et superposées et un orifice (10,14) de sortie d'un élément individuel hors du silo,
- un moyen de séparation des éléments situées dans le silo et
- un moyen de guidage (5) de sortie d'un élément hors du silo
**caractérisé en ce que** chaque élément est emballé dans une enveloppe fermée souple et en ce que le moyen de séparation est mobile et apte à s'adapter à l'épaisseur de l'élément emballé et forme un moyen de séparation physique entre l'élément à éjecter et les éléments empilés de sorte à délimiter une chambre (60) d'accueil temporaire de l'élément à éjecter.

## Description

L'invention concerne un dispositif de distribution d'éléments individuels. Plus particulièrement, l'invention concerne un dispositif de distribution d'éléments individuels dénommés usuellement « pod » (pastilles operculées bien connues de l'homme de l'art) prévus pour une utilisation dans des distributeurs du type distributeurs de boissons chaudes, par exemple non limitatif des machines à café du type de celles qu'on trouve dans les entreprises, les espaces publics ou encore pour des machines individuelles de particuliers.

On nomme ci-après « pod », une dosette de café torréfié, moulu, pressé et enveloppé dans du papier filtre, la dosette étant destinée à être utilisée une seule fois dans une machine à café. Le pod est hermétiquement emballé dans un contenant ou sachet de papier plastifié.

Une fois le pod sorti de son emballage, celui-ci perd toute odeur en l'espace d'une vingtaine de minutes et s'oxyde de manière très rapide. Aussi, un café, qui n'est pas produit à partir d'un pod fraîchement déballé, présente une odeur altérée et est dégradé sur le plan gustatif.

Par conséquent, le dispositif de l'invention vise en particulier l'utilisation de pods emballés en vue de leur distribution individuelle, sans toutefois y être limité et peut concerner tout élément individuel emballé à distribuer par une machine. Le dispositif est essentiellement destiné et intégré dans des machines de distribution automatique, du type distributeur de boissons. Le dispositif de l'invention sera mis en fonctionnement lorsqu'un consommateur aura appuyé sur un bouton de commande de la machine de distribution, le dispositif éjectera au sein de la machine un pod emballé qui sera à son tour délivrer par la machine au consommateur. Ce n'est qu'après délivrance que le consommateur déchirera l'emballage pour employer la dosette avec un système d'infusion.

Les distributeurs de boissons du type machine à café permettent de fournir à un utilisateur une boisson, individuelle, servie dans un gobelet, préparée sur commande et consommable de suite. Afin de s'adapter aux différentes attentes et goûts des utilisateurs, ces distributeurs proposent une vaste palette de boissons. Ces boissons sont préparées en mélangeant de l'eau, chaude généralement, à une préparation conditionnée directement sous forme de poudre mélangée à l'eau ou encore sous forme de dosette individuelle pour préparation par ladite machine.

On connaît des demandes de brevets publiées, telles que les documents WO 2006/059015 et EP 1 334 678, qui décrivent des dispositifs de distribution de dosettes individuelles, les dosettes étant empilées dans une réserve les unes sur les autres. Toutefois, les dosettes sont dépourvues de tout emballage individuel.

La demande de brevet WO 2006/059015 présente un dispositif de distribution de dosettes individuelles contenues dans une cartouche, les dosettes étant dépourvues d'emballage. Dans ce dispositif, la cartouche est insérée dans un guide et repose sur un plateau supérieur. Le plateau supérieur comporte un orifice au travers duquel tombe par gravité la dosette d'extrémité inférieure lorsque celle-ci est poussée latéralement par un élément coulissant. La dosette tombe dans un parte-filtre en vue de son infusion.

Ce dispositif présente de nombreux inconvénients qui le rendent peu fiable en utilisation. En effet, l'ensemble des dosettes de la cartouche repose sur les dosettes situées en bas de la pile de dosettes. Ces dosettes imposent un surpoids sur les dosettes inférieures pouvant entraîner l'insertion simultanée de deux dosettes au travers de l'orifice du plateau supérieur. Une telle insertion simultanée peut gêner et bloquer le coulissement de l'élément coulissant, et donc entraîner le blocage du distributeur de dosettes. Cette insertion simultanée est d'autant plus probable que les dosettes recouvertes d'un seul papier filtre peuvent être amenées à « se coller » les unes aux autres dans le temps ou par l'humidité dans l'air.

Ce manque de fiabilité est encore plus préjudiciable dans le cadre de distributeurs de boissons à choix multiples ; de tels distributeurs contenant les cartouches dans l'enceinte même du distributeur et n'étant donc accessibles que par un opérateur ou agent de maintenance, ladite cartouche reste donc inaccessible et inutilisable tant que l'opérateur n'est pas intervenu pour débloquer le dispositif de distribution de dosettes.

Par ailleurs, de tels dispositifs sont encombrants et difficilement intégrables dans le cadre d'un distributeur de boisson multipliant le choix des boissons possibles et donc le nombre de cartouches insérées dans ledit distributeur.

Enfin, un tel dispositif est rédhibitoire à l'emploi pour un consommateur qui souhaiterait préparer lui-même sa boisson infusée et la déguster ultérieurement. En effet, les dosettes stockées sont dépourvues de tout emballage hermétique et sont délivrées pour être directement infusées.

La demande de brevet EP 1 334 678 montre un dispositif de distribution présentant un autre système de distribution unitaire de dosettes depuis un empilement en colonne de dosettes.

Néanmoins, là encore, les dosettes stockées par empilement sont dépourvues d'emballage.

Or les systèmes de séparation des dosettes montrés dans ces documents ne sont nullement adaptés à des dosettes emballées. En effet, si les opérations de séparation et d'éjection d'une dosette nue sans emballage hermétique souple est relativement aisé du fait que le pod nu constitue alors une pièce compacte, relativement rigide qui peut être poussé sans grande précaution, ce n'est pas le cas pour des pods emballés.

En effet, l'emballage d'un pod est souple présentant une feuille souple supérieure et une feuille souple inférieure soudées entre elles sur leurs bords périphériques. Lorsque les pods sont empilés les uns sur les autres, chaque pod avec son emballage occupe un volume qui peut légèrement varier de quelques millimètres en hauteur de la colonne ou silo les accueillant. Ainsi, le pod emballé présente typiquement une épaisseur variant entre 9 mm et 12 mm.

Aussi, il n'est pas aisé de fournir un moyen de séparation qui devrait séparer un pod emballé des autres empilés sur lui et de l'éjecter en le poussant, alors même que d'une part l'épaisseur du pod emballé est variable, et d'autre part l'emballage souple ne favorise pas une action percutante de poussée qui risquerait de déchirer l'emballage.

L'invention a donc pour but de fournir un dispositif de stockage et de distribution d'éléments individuels, notamment du type dosettes ou pods emballés, qui soit fiable, permette le stockage des dosettes pourvues de leur emballage, et assure la distribution d'une seule et unique dosette à la fois sans risque de blocage dudit dispositif tout en conservant un encombrement limité de celui-ci, et sans risque de déchirer l'emballage de la dosette.

L'invention a pour objet un dispositif de distribution d'éléments individuels, le dispositif comportant un silo, ledit silo contenant les éléments emballés individuels et superposés et comportant un orifice de sortie d'un élément, un moyen de séparation des éléments situés dans le silo et un moyen de guidage en sortie hors du silo d'un élément, **caractérisé en ce que** chaque élément est emballé dans une enveloppe fermée souple et en ce que le moyen de séparation est mobile et apte à s'adapter à l'épaisseur de l'élément emballé et forme un moyen de séparation physique entre l'élément à éjecter et les éléments empilés de sorte à délimiter une chambre d'accueil temporaire de l'élément à éjecter. Le moyen de séparation des éléments est distinct du moyen de guidage.

En particulier, sans y être limité, les éléments emballés sont des dosettes individuelles emballées destinées à être distribuées individuellement pour un usage ultérieur.

Ainsi, le moyen de séparation permet de s'ajuster à l'épaisseur de la dosette à éjecter et de la séparer de la pile au-dessus, quel que soit le volume occupé par la dosette et son emballage souple, et bien que la feuille supérieure souple de l'emballage ne soit pas à fleur de la partie supérieure dure de la dosette mais atteigne une hauteur de 1, 2 ou 3 mm au-dessus de cette partie supérieure dure de la dosette.

En outre, une fois le moyen de séparation ayant accompli son rôle, la dosette dotée de son emballage est logé dans une chambre d'isolement. Ainsi isolée des autres dosettes emballées, elle est libre et ne subit aucune contraintes/pressions en sa partie supérieure par les autres dosettes, ni même sur ses autres côtés, et peut être poussée délicatement sans forte pression par glissement, ce qui limite au maximum les frottements avec l'emballage et évite tout risque de déchirement. En effet, contrairement à l'état de la technique pour lequel les dosettes sont dépourvues d'emballage, les dosettes emballées ne doivent surtout pas être poussées sans précaution à la manière d'une pièce monobloc, rigide.

Dans la suite de la demande, les qualificatifs « supérieur », « inférieur », « haut » et « bas » d'un élément du dispositif sont utilisés dans le cadre d'une installation normale du dispositif, c'est-à-dire relatif à une notion sensiblement verticale du silo par rapport à un sol plat horizontal. Les qualificatifs « longitudinal » et « latérale » ainsi que les notions de « longueur » et de « largeur » sont utilisés en référence respectivement au coté le plus long et au coté le moins long d'un élément qualifié. Enfin, les termes « distal » et « proximal » sont utilisés afin de respectivement caractériser une partie éloignée du corps ou d'une liaison principale de l'élément caractérisé, et au contraire proche dudit corps ou liaison principale de l'élément caractérisé.

Par ailleurs, un tel moyen de séparation des dosettes selon l'invention sert de support à l'ensemble des dosettes situées au dessus de la dosette à éjecter dans le silo. Dans la pratique, le moyen de séparation est inséré entre deux dosettes, l'ensemble des dosettes situées dans le silo au dessus dudit moyen de séparation reposent alors sur le moyen de séparation et non plus sur la dosette située sous ledit moyen de séparation. La dosette inférieure située sous le moyen de séparation ne subit plus le poids des dosettes qui reposent à présent sur le moyen de séparation.

Enfin, le dispositif ayant ainsi isolé la dosette à éjecter de celles empilées ne risque pas d'éjecter simultanément sous le poids de la pile plusieurs dosettes. Le dispositif selon l'invention ne risque pas de se bloquer.

Dans un mode de réalisation du dispositif selon l'invention, le moyen de guidage pour éjecter les éléments individuels comporte un élément poussoir mobile en translation coopérant avec des ouvertures adaptées dans le silo. Dans ce mode de réalisation, le silo comporte une ouverture frontale ou avant et une ouverture dorsale ou arrière. Ces ouvertures sont situées en regard l'une de l'autre à l'extrémité distale inférieure dudit silo. L'une des ouvertures est apte à laisser sortir une unique dosette, c'est-à-dire que la hauteur des ouvertures, et principalement de l'ouverture frontale, est supérieure et proche de l'épaisseur d'une unique dosette emballée.

Le moyen de guidage comporte un élément poussoir, par exemple sous la forme d'un plateau de dimensions sensiblement inférieure et proche des dimensions des ouvertures du silo. Cet élément poussoir est mobile en translation en se déplaçant sensiblement horizontalement. Le déplacement de l'élément poussoir se fait par exemple au travers de l'ouverture arrière du silo, par exemple l'introduction de l'élément poussoir à travers l'ouverture arrière du silo pousse une dosette en regard jusqu'à l'ouverture opposée de façade depuis laquelle la dosette est éjectée hors du silo.

Avantageusement, l'élément poussoir est formé par le plateau sur lequel repose l'élément individuel le plus inférieur avant l'introduction du moyen de séparation dans le silo.

De préférence, le moyen de séparation comporte une lame ou plaque de séparation mobile en translation, typiquement horizontalement, transversalement à la hauteur du silo accueillant les dosettes emballées et empilées. La lame assure par sa translation de se glisser entre la dosette la plus inférieure et la dosette juste au-dessus pour engendrer leur séparation. La lame n'a pas de fonction tranchante.

En outre, la lame délimite avec un socle du silo ou une surface d'accueil inférieure telle qu'un plateau, une chambre aux parois inférieures et supérieures dans laquelle est logée avant éjection la dosette emballée.

La lame assure le support des dosettes situées dans le silo au dessus de ladite lame.

Par ailleurs, la lame est mobile verticalement, longitudinalement au silo, par rapport à une position de référence ou de repos avant sa translation horizontale, la lame étant apte à pivoter d'un côté de cette position de repos, vers le haut, d'une hauteur de préférence de quelques millimètres, jusqu'à environ 5 mm, telle que 2 à 3 mm.

La lame est apte à pivoter librement dans un plan vertical autour d'un point d'articulation agencé à son extrémité opposée à celle s'introduisant dans le silo.

Avantageusement, la lame est suffisamment rigide pour supporter le poids des dosettes supérieures, tout en étant suffisamment légère pour être pivotée automatiquement lors de sa rencontre avec un obstacle dur formé par l'élément individuel enveloppé dans l'emballage souple. A cet égard, la lame est de préférence en acier inoxydable pour être en outre compatible d'un point de vue alimentaire et présente une épaisseur en particulier de l'ordre de 1 mm.

En position de repos, le moyen de séparation (la lame) est situé en position de repos en vis-à-vis de l'élément le plus inférieur de la pile d'éléments. Plus particulièrement, la lame est positionnée à une hauteur par rapport à la surface d'accueil inférieure (socle du silo ou plateau inférieur) dudit élément destiné à être éjecté (la dosette d'extrémité inférieure de la pile) de 9 mm. Ainsi, une dosette emballée qui présente une épaisseur entre 9 et 12 mm sera en regard systématiquement de la lame qui pourra pivoter légèrement de quelques millimètres, typiquement 1 à 3 mm, dès qu'elle rencontrera le dur de l'élément, pour se positionner à la hauteur de la feuille supérieure de l'enveloppe et glisser au-dessus d'elle lors de la translation horizontale de la lame.

Le silo présente en regard de la lame une fenêtre pour assurer le passage de la lame lors de sa mobilité (sa translation et son pivotement).

La lame de séparation peut être réalisée fine et rigide, par exemple en métal rigide, de manière à supporter le poids des dosettes sans se plier. Dans un perfectionnement, la lame de séparation comporte une extrémité distale d'une épaisseur inférieure à l'épaisseur de son extrémité proximale. La finesse de l'extrémité distale de la lame assure un bon engagement de ladite lame, facilitant son insertion entre deux dosettes et la séparation de celles-ci. L'épaisseur de l'extrémité proximale de la lame assure une rigidité à la lame permettant le support sans déformation des dosettes contenues au dessus de la lame lorsque celle-ci est insérée dans le silo.

Dans une autre variante qui est préférée, la lame présente à son extrémité distale destinée à être engagée en premier dans le silo, un doigt faisant saillie dans le plan horizontal général de la lame. Il s'avère que ce doigt n'engendre pas de contact trop rude et tranchant lors de la rencontre de la lame avec la feuille souple de l'enveloppe de la dosette et aide particulièrement, une fois la partie dure rencontrée de la dosette, à l'insertion de la lame entre la feuille souple supérieure de l'enveloppe et la feuille souple inférieure de l'enveloppe de la dosette juste au-dessus.

L'invention porte en outre sur un dispositif de distribution de boissons comportant un dispositif de distribution d'éléments selon l'invention. Un tel dispositif de boisson peut comporter une pluralité de dispositifs de distribution de dosettes selon l'invention. Un tel dispositif de distribution de boisson comporte par exemple un choix de boissons, chaque boisson correspondant à un dispositif de distribution de dosette.

La distribution d'éléments individuels du type dosettes peut être associée à la distribution d'éléments supplémentaires individuels à délivrer concomitamment au premier élément. A titre d'exemple, les dosettes individuelles emballées sont à base d'un produit destiné à être infusé, du type café, thé ou similaire, et l'élément supplémentaire est un carré emballé de chocolat ou autre friandise.

Au moins un dispositif de l'invention pourrait être associé avec un dispositif de fonctionnement identique ou un dispositif de distribution usuel, pour délivrer concomitamment deux produits respectifs emballés de manière individuelle, au moins pour le premier sous un emballage souple, tels que des dosettes à infuser emballées individuellement, et pour le second des friandises emballées également individuellement.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue schématique en coupe et de côté d'un dispositif de distribution d'éléments individuels emballés selon l'invention dans une position de repos;
- La figure 2 est une vue schématique de côté d'un élément individuel emballé ;
- La figure 3 est une vue partielle schématique en perspective du moyen de séparation du dispositif de l'invention ;
- Les figures 4 à 7 représentent des vues de la figure 1 à respectivement plusieurs étapes de fonctionnement.

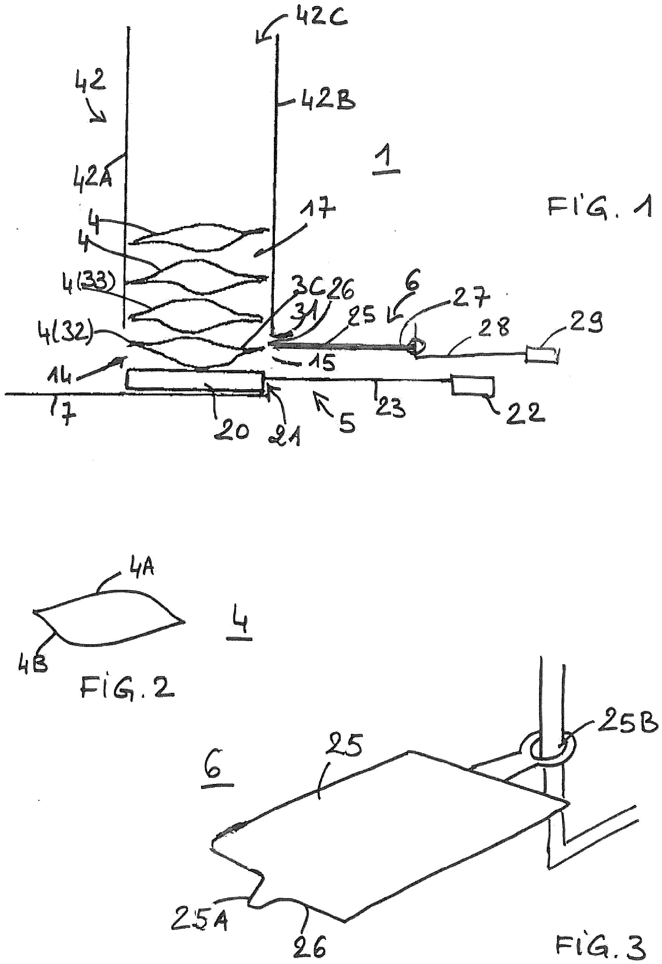

La figure 1 représente une vue schématique de côté selon l'invention d'un distributeur en position de repos (n'étant pas en fonctionnement) d'éléments individuels emballés tels que des dosettes emballées destinées à être délivrer individuellement pour être utilisées ultérieurement par infusion de la dosette en ayant déchiré préalablement l'emballage.

Un élément individuel emballé 4 se présente tel que visible sur la figure 2 sous la forme d'une enveloppe souple d'emballage présentant une feuille souple supérieure 4A, une feuille souple supérieure 4B rendues solidaires l'une de l'autre sur l'ensemble de leur périphérie emprisonnant hermétiquement l'élément individuel rigide dans l'enveloppe.

Le dispositif de distribution de dosettes 1 selon l'invention comporte un silo 42 contenant des dosettes emballées 4. Chaque dosette ou pod est emballé dans un contenant ou enveloppe souple fermée de préférence en matière plastifiée.

Un tel silo 42 est composé d'un support 2 dans lequel sont empilées des dosettes emballées 4. Le support présente la forme d'une colonne ou silo pourvues d'au moins deux parois verticales et opposées 42A et 42B, dites avant et arrière, pour maintenir en place les dosettes par empilement.

Le dispositif selon l'invention comporte un moyen de guidage 5 des dosettes qui est apte à éjecter la dosette emballée 4 la plus inférieure du silo hors dudit silo 42, ainsi qu'un moyen de séparation 6 ce cette dosette inférieure des autres dosettes 4 contenues dans le silo.

Selon l'invention et tel qu'il sera vu plus loin, le moyen de séparation 6 permet d'une part de séparer physiquement la dosette emballée la plus inférieure de la pile de celle située juste au-dessus d'elle, et d'autre part de l'isoler physiquement dans une chambre provisoire avant son éjection. En outre, le moyen de séparation 6 permet de soutenir les dosettes 4 supérieures empilées au-dessus de celle venant d'être isolée. Le moyen de séparation 6 évite l'éjection simultanée de plusieurs dosettes 4, et par conséquent le blocage du dispositif 1.

Le support 2 comporte un socle 7 sur lequel repose le silo 42. Les dosettes 4 sont introduites dans le silo 42 par exemple par une ouverture 42C située en partie supérieure dudit silo 42.

Le dispositif 1 comporte une surface d'accueil sur laquelle repose la dosette la plus inférieure 32 de la pile. Cette surface d'accueil peut être le socle 7 du silo ou bien tel que représenté, un plateau 20 associé au moyen de guidage 5 destiné à assurer l'éjection de la dosette hors du silo.

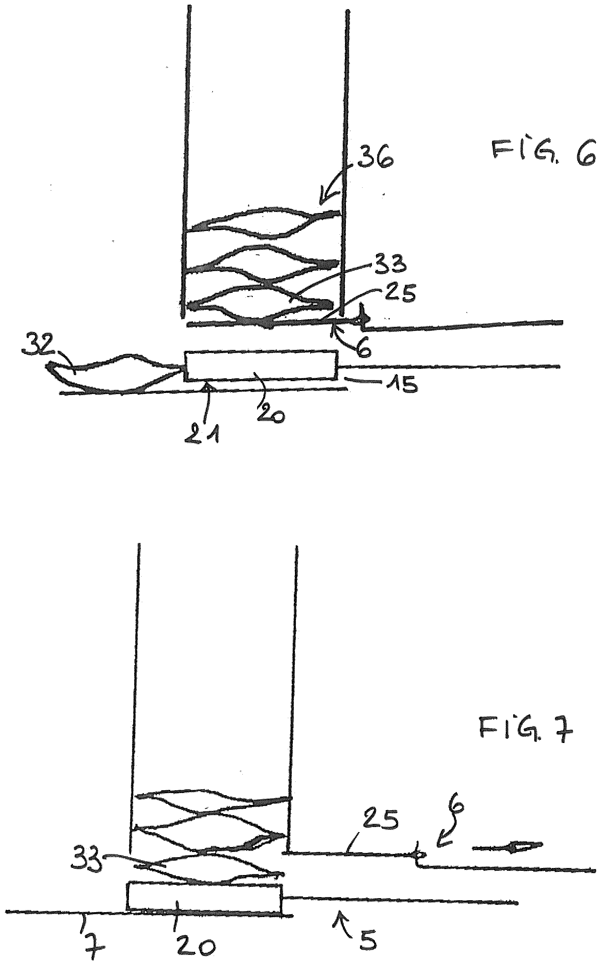

Les parois avant 42A et arrière 42B du silo comporte en leur extrémité inférieure des lumières respectives avant et arrière 14 et 15, la dosette la plus inférieure 32 se trouvant à leur niveau. Le moyen de guidage 5 est destiné à coulisser au travers de ces lumières pour traverser de part en part le silo. Il s'engage dans la lumière arrière 15, pousse la dosette 32 qui passe au travers de la lumière avant 14, et poursuit sa translation hors du silo à travers la lumière avant 14 afin d'éjecter complètement la dosette hors du silo (figure 6).

En regard de la figure 1, le moyen de guidage 5 comporte plus particulièrement un élément poussoir 21 mobile en translation. Cet élément poussoir 21 a une épaisseur sensiblement inférieure et proche de la hauteur de la lumière arrière 15. L'élément poussoir 21 est monté coulissant en translation, selon une direction horizontale, à l'aide par exemple d'un élément moteur 22 relié à une tige 23 le long de laquelle coulisse l'élément poussoir 21.

Avantageusement, l'élément poussoir 21 constitue directement la surface d'accueil 20 de la dosette inférieure 32, cette surface d'accueil étant amenée hors du silo par sa translation. De préférence et tel que représenté, l'élément poussoir 21 constitue en soi un moyen de poussée pour la dosette inférieure 32 reposant sur la surface d'accueil 20.

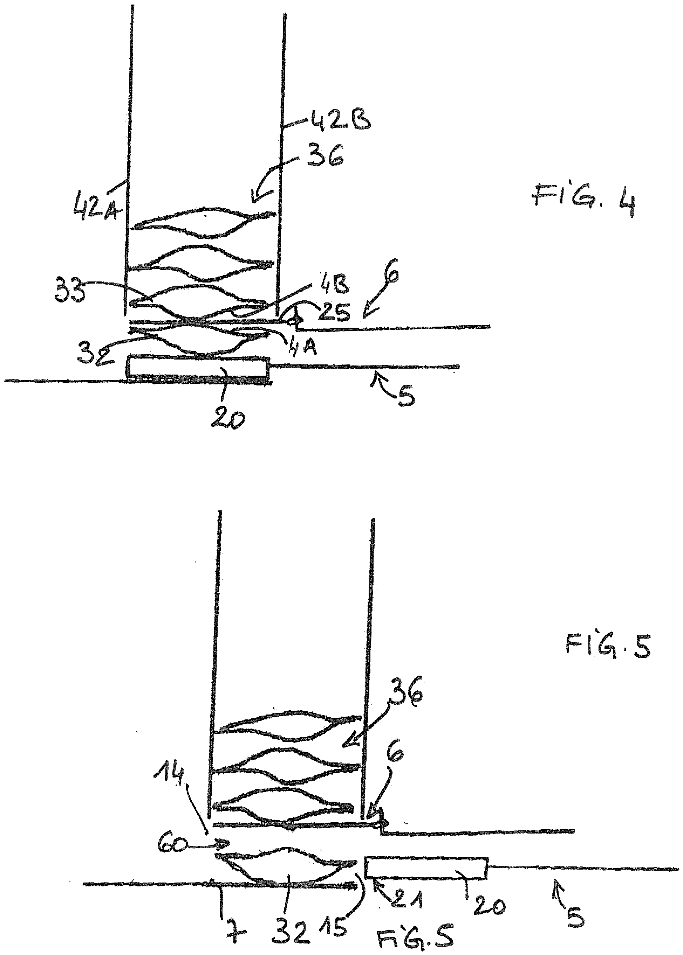

Le dispositif 1 selon l'invention comporte un moyen de séparation 6 apte à délimiter (figure 5) une chambre provisoire 60 d'accueil de la dosette la plus inférieure 32 à éjecter. La chambre provisoire 60 est délimitée en surface inférieure par le socle 7, et en surface supérieure, par le moyen de séparation 6, et de manière latérale au moins par les lumières avant 14 et arrière 15. C'est dans cette chambre que coopère par coulissement l'élément poussoir 21.

La chambre provisoire 60 par son volume et le moyen de séparation 6 de la dosette inférieure de celles empilées au-dessus permettent d'isoler qu'une seule dosette à la fois afin de garantir une seule éjection et éviter tout blocage du dispositif.

En outre, la dosette étant isolée, elle peut être poussée délicatement sans forte pression par l'élément poussoir 21 qui n'a juste qu'à la guider hors du silo, évitant tout déchirement de l'emballage.

Le moyen de séparation 6 a pour fonction de séparer la dosette la plus inférieure 32 des dosettes 4 empilées, et sert alors de surface de support à ces dernières.

Le moyen de séparation 6 en position de repos est agencé juste au-dessus de l'élément de guidage 5 hors du silo et est en regard de la partie médiane 3C de l'enveloppe souple de la dosette la plus inférieure 32.

En regard de la figure 3, le moyen de séparation 6 comporte une lame de séparation 25 mobile en translation, typiquement horizontalement selon une direction parallèle à la direction de translation de l'élément poussoir 21. La lame 25 coopère pour son passage avec une fenêtre 31 transversale prévue à cet effet sur la paroi arrière verticale 42B du silo, et coplanaire avec la lumière arrière 15. Le mouvement en translation de la lame 25 insère ladite lame 25 dans le silo en traversant cette fenêtre 31.

La lame de séparation 25 peut être plane et rigide, permettant ainsi de séparer correctement la dosette inférieure 32 tout en assurant le support des dosettes supérieures 4 reposant sur la lame 25 en utilisation. Dans une variante, la lame de séparation 25 comporte une extrémité distale 26 d'une épaisseur inférieure à l'épaisseur de son extrémité proximale 27.

La lame 25 est montée mobile en translation horizontale pour traverser le silo 3. Cette translation est effectuée à l'aide de tout moyen connu de l'homme de l'art, par exemple en étant montée sur un système de guidage 28 sous forme de vis sans fin reliée à un moteur 29, l'ensemble de ces éléments pouvant être eux-mêmes montés sur un plateau. Le système de guidage 28 réalise par poussée la translation de la lame 25.

La finesse de l'extrémité distale 26 de la lame 25 assure à la lame 25 son insertion entre deux dosettes 4. L'épaisseur de l'extrémité proximale 26 de la lame 25 assure une rigidité et une solidité à la lame 25. Lors de son utilisation, et plus particulièrement lorsqu'elle supporte le poids des dosettes de la partie supérieure 17 du silo, cette rigidité et cette solidité assurent l'absence de déformation de la lame 25.

Dans la variante représentée sur la figure 3 et de manière préférée, la lame 25 se présente sous la forme d'une plaque possédant une superficie sensiblement similaire à la section du silo et présentant une surface générale plane. La lame comporte en son extrémité distale 26, celle destinée à être introduite en premier dans le silo, un doigt 25A faisant saillie dans le plan horizontal général de la lame.

Selon l'invention, le moyen de séparation 6 (la lame 25) est en outre mobile verticalement par pivotement autour d'un point d'articulation 25B situé à son extrémité latérale libre opposée à celle s'introduisant dans le silo. Elle pivote dans un plan vertical de manière à se dégager de sa position de repos en s'élevant jusqu'à une position supérieure limitée, de préférence d'une hauteur d'au plus 5 mm par rapport à la position de repos.

En position de repos de la lame, celle-ci est agencée pour être en vis-à-vis de la partie médiane 3C de la dosette inférieure.

Les figures 4 à 7 correspondent à la figure à plusieurs étapes de fonctionnement du dispositif dont on explique ci-après le fonctionnement.

En regard de la figure 1, la dosette la plus inférieure 32 repose sur le plateau 20 du moyen de guidage 5. Le distributeur est mis en fonctionnement, la lame 25 du moyen de séparation 6 est translatée horizontalement en direction du silo et s'introduit dans la fenêtre 31.

Lors d'une utilisation, la lame 25 du moyen de séparation 6 est insérée dans le silo. En regard de la figure 4, l'extrémité distale 26 de la lame 25 s'insère alors entre deux dosettes emballées 32 (celle la plus inférieure) et 33 consécutives dans la pile 33 de dosettes 4.

Dans un premier temps, la lame mobile horizontalement entre en contact avec l'enveloppe d'emballage de la dosette au niveau de sa partie médiane et vient buter contre la partie dure de la dosette, ce qui engendre, concomitamment à la translation horizontale de la lame, son pivotement mécanique et automatique vers le haut pour éviter un obstacle rigide, amenant la lame à passer au-dessus de la feuille supérieure souple 3A de l'enveloppe tel que visible sur la figure 4. Comme le dégagement vertical de la lame est prévu pour être limité à 2 voire 3 mm, la lame s'introduit de manière appropriée entre la feuille souple supérieure 4A de la dosette inférieure 32 et la feuille souple inférieure 4B de la dosette juste au-dessus 33 sans aller au delà de cette feuille souple inférieure.

De manière simultanée, la lame assure la séparation physique des deux dosettes emballées 32 et 33 consécutives, en constituant une barrière de séparation.

Dans un second temps, la lame 25 ayant été translatée horizontalement depuis l'une des parois verticales du silo cartouche jusqu'à vers la paroi verticale opposée, elle est alors agencée de manière à obturer au moins partiellement, de préférence au moins aux trois quarts, la section cylindrique du silo, engendrant un support rigide à la partie supérieure 36 de la pile de dosettes 4 emballées.

Il s'avère qu'en fonction du matériau et de l'épaisseur de la lame 25, celle-ci peut être insérée sans aller jusqu'en butée contre la paroi avant 42A, permettant de gagner du temps dans la totalité des opérations pour délivrer au final une dosette et entamer si besoin une seconde séparation.

En fin de cette étape, la dosette inférieure 32 repose encore sur le plateau 20 du moyen de guidage 5.

En regard de la figure 5, après cette insertion de la lame 25 du moyen de séparation dans le silo, le moyen de guidage est tracté dans la direction opposée au silo pour sortir le plateau 20 hors du silo et déposer la dosette sur le socle 7.

La dosette inférieure 32 est alors située dans la chambre provisoire 60.

Le plateau 20 retiré hors du silo permet ensuite de servir d'élément poussoir 21.

L'élément poussoir 21 coulisse alors le long de son axe de translation en direction du silo et au travers de la lumière arrière 15 en poussant au travers de la lumière avant 14 la dosette hors du silo. La dosette inférieure 32 n'étant plus soutenue est destinée à tomber par gravité.

Une fois la dosette inférieure tombée, l'élément poussoir 20 coulisse

L'appui de la partie supérieure 36 de la pile de dosette 4 sur la lame 25 évite l'application d'un poids trop important sur la dosette inférieure 32, typiquement le poids de ladite partie supérieure 36 qui est important dans le cadre d'une pile d'une centaine de dosettes 4. La dosette inférieure 32 n'étant pas surchargée en étant isolée dans la chambre 60, la force à appliquer par l'élément poussoir 21 afin de déplacer ladite dosette inférieure 32 n'a pas besoin d'être forte mais juste suffisante pour assurer son glissement.

En regard de la figure 7, une fois la dosette inférieure tombée, l'élément poussoir 21 coulisse en sens inverse de façon à positionner le plateau 20 dans le silo tel qu'il était en figure 1. En même temps, est exercé un mouvement de retrait en translation de la lame 25 qui revient à son niveau de positionnement horizontal hors du silo.

Selon un mode de réalisation de l'invention non illustré, au moins un dispositif de distribution de dosettes 1 de l'invention peut être intégré à l'intérieur d'un distributeur de boissons.

Ce distributeur de boisson comporte une pluralité de dispositifs de distribution de dosettes 1. Il présente généralement une enceinte extérieure ayant en façade une porte rabattable, donnant accès à un espace interne dudit dispositif. Une pluralité de dispositifs de distribution de dosettes 1 selon l'invention est agencée dans l'espace interne. Le dispositif comporte un système de gestion des boissons, par exemple composé d'une carte électronique reliée d'une part à un tableau de commande en façade et d'autre part aux multiples dispositifs de distribution de dosette. En fonction de la boisson choisie par un utilisateur, le système de gestion des boissons active le dispositif de distribution de dosettes concerné qui éjecte une dosette du silo, ladite dosette étant récupérée et traitée par le dispositif de distribution de boisson afin de la fournir à l'utilisateur.

## Revendications

1. Dispositif de distribution d'éléments individuels (1) comportant :
- un silo (42),
- ledit silo contenant des éléments emballés individuels (4) et superposées et comportant un orifice (10,14) de sortie d'un élément individuel hors du silo,
- un moyen de séparation des éléments situées dans le silo et
- un moyen de guidage (5) de sortie d'un élément hors du silo **caractérisé en ce que** chaque élément est emballé dans une enveloppe fermée souple et **en ce que** le moyen de séparation est mobile et apte à s'adapter à l'épaisseur de l'élément emballé et forme un moyen de séparation physique entre l'élément à éjecter et les éléments empilés de sorte à délimiter une chambre (60) d'accueil temporaire de l'élément à éjecter.

2. Dispositif selon la revendication 1 **caractérisé en ce que** le moyen de séparation (6) est distinct du moyen de guidage (5) apte à séparer les éléments.

3. Dispositif selon la revendication 1 ou 2, **caractérisé en ce que** le moyen de séparation (6) comporte une lame ou plaque de séparation (25) mobile en translation horizontale et apte à être introduite dans le silo, transversalement à la hauteur du silo, de préférence possédant à son extrémité distale destinée à être engagée en premier dans le silo un doigt faisant saillie dans le plan horizontal général de la plaque.

4. Dispositif selon l'une quelconque des revendications précédentes, **caractérisé en ce que** le moyen de séparation (6) délimite avec un socle du silo ou une surface d'accueil inférieure telle qu'un plateau, la chambre (60) aux parois inférieures et supérieures dans laquelle est logée avant éjection l'élément individuel à éjecter.

5. Dispositif selon l'une quelconque des revendications précédentes, **caractérisé en ce que** le moyen de séparation (6) est apte à pivoter librement dans un plan vertical autour d'un point d'articulation agencé à son extrémité opposée à celle s'introduisant dans le silo, de préférence en s'écartant de sa position de repos d'une hauteur de 1 à 3 mm.

6. Dispositif selon l'une quelconque des revendications précédentes, **caractérisé en ce que** le moyen de séparation (6) est en acier inoxydable et présente une épaisseur de l'ordre de 1 mm.

7. Dispositif selon l'une quelconque des revendications précédentes, **caractérisé en ce que** le moyen de séparation (6) est situé en position de repos en vis-à-vis de l'élément (32) le plus inférieur de la pile d'éléments, en particulier est positionné à une hauteur par rapport à la surface inférieure d'accueil dudit élément, de 9 mm.

8. Dispositif selon l'une quelconque des revendications précédentes, **caractérisé en ce que** le silo comporte une fenêtre (31) pour assurer le passage du moyen de séparation (6) lors de sa mobilité.

9. Dispositif selon l'une des revendications précédentes, **caractérisé en ce que** le moyen de guidage (5) comporte un élément poussoir (20) mobile en translation transversalement au corps longitudinal du silo et apte à s'introduire dans la chambre (60).

10. Dispositif selon la revendication précédente, **caractérisé en ce que** l'élément poussoir (21) est formé par le plateau sur lequel repose l'élément individuel le plus inférieur avant l'introduction du moyen de séparation dans le silo.

11. Dispositif selon l'une quelconque des revendications, **caractérisé en ce que** les éléments individuels sont des dosettes de café ou de thé ou de tout autre produit de nature à être infusé.

12. Dispositif de distribution de boisson comportant au moins un, et de préférence une pluralité de dispositifs de distribution d'éléments selon l'une des revendications 1 à 11.

13. Ensemble comprenant au moins un dispositif selon l'une des revendications 1 à 11 et un dispositif de fonctionnement identique ou un dispositif de distribution usuel, **caractérisé en ce qu'**il délivre concomitamment deux produits respectifs emballés de manière individuelle, tels que des dosettes à infuser emballées individuellement et des friandises emballées également individuellement.
